(19) Europäisches Patentamt
European Patent Office
Office européen des brevets

(11) **EP 4 455 711 A1**

(12) **EUROPEAN PATENT APPLICATION**

(43) Date of publication:
**30.10.2024 Bulletin 2024/44**

(21) Application number: **23170698.7**

(22) Date of filing: **28.04.2023**

(51) International Patent Classification (IPC):
**G01S 5/02** *(2010.01)*      **H04W 4/029** *(2018.01)*

(52) Cooperative Patent Classification (CPC):
**G01S 5/0273; G01S 5/0278; H04W 4/029**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicants:
• **Imec VZW**
  **3001 Leuven (BE)**
• **Universiteit Gent**
  **9000 Gent (BE)**

(72) Inventors:
• **Li, Chenglong**
  **9000 Gent (BE)**
• **Tanghe, Emmeric**
  **9000 Gent (BE)**
• **Joseph, Wout**
  **8570 Vichte (BE)**

(74) Representative: **IP HILLS NV**
  **Bellevue 5/501**
  **9050 Gent-Ledeberg (BE)**

(54) **LOCATION TRACKING OF A WIRELESS DEVICE**

(57)      Example embodiments relate to a computer-implemented method (100) for tracking a communication device moving through an indoor environment; the method comprising: i) obtaining (101) channel impulse responses, CIRs, between the communication device and anchor devices along multiple propagation paths; ii) determining (102) an a priori distribution of the location of the communication device within the environment; iii) determining (103) from the channel impulse responses conditional distributions of the range-related measurements conditioned on a range between a potential location of the communication device within the a priori distribution and the respective anchor devices along respective line of sight, LoS, and first order propagation paths; and iv) estimating (104) the location of the communication device as the potential location for which a combination of the a priori distribution and the conditional distributions is maximized.

100

```
                 ┌──────────────┐
                 │ OBTAIN CIRs  │ 101
                 └──────┬───────┘
                        │
   ┌──────────────────────────────┐
   │   DETERMINE                   │ 102
┌─▶│   A PRIORI DISTRIBUTION       │
│  └──────────────┬────────────────┘
│                 │
│  ┌──────────────────────────────┐
│  │   DETERMINE                   │ 103
│  │   CONDITIONAL DISTRIBUTION    │◀─
│  └──────────────┬────────────────┘
│                 │
│  ┌──────────────────────────────┐
└──│   ESTIMATE LOCATION           │ 104
   └──────────────────────────────┘
```

Fig. 1

## Description

## Technical Field

Various example embodiments relate to, amongst others, tracking of a communication device moving through an environment wherein the device wirelessly communicates with anchors placed throughout the environment.

## Background

In an indoor positioning system, the location of mobile nodes is tracked using wireless communication technology. In one implementation, a mobile node is equipped with a wireless communication interface and communicates with communication devices that have a fixed known position, also referred to as anchors or anchor nodes. By leveraging the channel characteristics of wireless propagation the location of the mobile device can be estimated.

One way to do this is by determining the line-of-sight, LoS, between the mobile node and anchor node and resolve the location therefrom. In multi-antenna systems this may be done by determining the angle-of-arrival, AoA, or the angle-of-departure, AoD. In wideband systems this may be done in the time-domain by time-of-flight, ToF, or range estimates on the direct propagation paths. LoS measurements may be obscured by other indirect propagation paths, so-called multipath components, MPCs, that result from reflections off for example walls and objects. Different techniques may be applied to separate the LoS from the MPCs in the measurements or to perform some sort of compensation on the LoS measurements.

Another solution is to incorporate the MPCs in the measurements, thereby using the spatial diversity of the indirect propagation paths for localization. In the publication C. Wu, X. Yi, W. Wang, L. You, Q. Huang, X. Gao, and Q. Liu, "Learning to Localize: A 3D CNN Approach to User Positioning in Massive MIMO-OFDM Systems," IEEE Transactions on Wireless Communications, vol. 20, no. 7, pp. 4556-4570, 2021, a fingerprinting-based method is disclosed wherein the MPCs are not obtained directly. Instead a regression or classification model is trained from a labelled dataset. The machine learning tool then implicitly makes use of the multipath information. In another publication K. Witrisal, P. Meissner, E. Leitinger, Y. Shen, C. Gustafson, F. Tufvesson, K. Haneda, D. Dardari, A. F. Molisch, A. Conti, and M. Z. Win, "High-Accuracy Localization for Assisted Living: 5G systems will turn multipath channels from foe to friend," IEEE Signal Processing Magazine, vol. 33, no. 2, pp. 59-70, 2016, the MPCs are estimated using a super-resolution channel estimation algorithm. The estimated MPCs are then associated with corresponding virtual anchors which are mirrored locations of the physical anchors relative to the planar reflectors. Although these techniques provide better accuracy and can resolve locations of nodes that do not have a direct LoS, they are much more processing intensive and, in case of machine-learning techniques, require a large, labelled dataset together with a training phase.

## Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

Amongst others, it is an object of the present disclosure to alleviate the above addressed shortcomings and to provide an improved indoor localization method.

According to a first example aspect, a computer-implemented method is provided for tracking a communication device moving through an indoor environment; the method comprising:

- obtaining channel impulse responses, CIRs, from range-related measurements between the communication device and anchor devices;
- determining an a priori distribution of the location of the communication device within the environment;
- determining from the channel impulse responses conditional distributions of the range-related measurements conditioned on a range between a potential location of the communication device within the a priori distribution and the respective anchor devices along respective line of sight, LoS, and first order propagation paths; and
- estimating the location of the communication device as the potential location for which a combination of the a priori distribution and the conditional distributions is maximized.

The a priori distribution of the location is the probabilistic distribution or the likelihood of the device's location that does not take into account the obtained range-related measurements. Then, the conditional distributions can be derived from the CIRs which contain both the LoS and multi-path components. The location of the communication device can then be inferred by maximizing the posterior distribution of the communication device's location given the range related measurements wherein, according to a Bayesian estimation, corresponds to finding the location for which the combination of the a priori distribution and the conditional distributions is maximized.

This method has the advantage that no exact, deterministic ranges of both the LoS and first order propagation paths must be derived. Instead, the conditional distributions of the range-related measurements are determined which are directly proportional to the ranging likelihood and, as such, are derivable from the channel impulse response.

According to example embodiments, the a priori distribution is based on a previously estimated location of the communication device, a previous estimated velocity of the communication device, and an error distribution, for example a zero-mean Gaussian velocity error.

In location tracking, the previous estimated positions of the device are available. From this, an a priori distribution of the device at the current location can be calculated, e.g. by assuming a certain deviation around the previous estimated speed. This allows obtaining an a priori distribution without requiring intensive calculations and thus processing.

According to further example embodiments, the determining an a priori distribution further comprises generating K particles as potential locations according to the a priori distribution. In other words, the a priori distribution is obtained in a discrete manner wherein the distribution of the K particles is a direct discrete representation of the a priori distribution.

According to further example embodiments, the determining the conditional distributions further comprises:

- calculating ranges between the K particles and the respective anchor devices along the respective LoS and first order propagation paths;
- mapping, for the respective anchor devices and respective propagation paths, the calculated ranges onto the respective CIRs; and
- and normalizing the so-obtained CIR portions thereby obtaining the conditional distributions.

the estimating then further comprises:

- for the respective K particles, determining the location likelihood.

In other words, the likelihood of each propagation path component is obtained via a sequential Monte Carlo and spatial-temporal-spatial (STEMS) likelihood mapping. No computation-complex data association is needed. The range likelihoods are obtained via a sequential importance sampling operation in a particle filter. The location likelihood of the communication device is thereby directly obtainable via the particle filter. Moreover, no machine learning is involved in these method steps. The disclosed steps can thus be implemented in a power efficient way for real-time tracking applications. The location likelihood is then further normalized for the K particles.

According to a further embodiment, the calculating ranges further comprises determining virtual anchors as mirrored locations of the anchor devices according to first order reflected propagation paths, and calculating the ranges between the K particles and both the anchor devices and virtual anchor devices; and wherein the mapping further comprises mapping the calculated ranges for both the anchor devices and virtual anchor devices onto the respective CIRs; and wherein the estimating further comprises, for the respective K particles, determining the location likelihood.

According to a second example aspect, a data processing apparatus comprising means for carrying out the method according to the first example aspect is disclosed.

According to a third example aspect, a computer program product comprising instructions which, when the program is executed by a computer, cause the computer to carry out the method according to the first example aspect is discloses.

According to a fourth example aspect, a computer-readable storage medium comprising instructions which, when executed by a computer, cause the computer to carry out the method according to the first aspect is disclosed.

## Brief Description of the Drawings

Some example embodiments will now be described with reference to the accompanying drawings.

Fig. 1 illustrates steps of a method for tracking a mobile communication device according to an example embodiment; and

Fig. 2 illustrates steps of a method for tracking a mobile communication device according to a further example embodiment; and

Fig. 3 illustrates an environment through which a mobile communication device moves along a trajectory; and

Fig. 4 and Fig. 5 show amplitude-delay profiles characterizing communication channels between a mobile communication device and respective anchor devices; and

Fig. 6 shows a suitable computing system for performing methods according to example embodiments.

## Detailed Description of Embodiment(s)

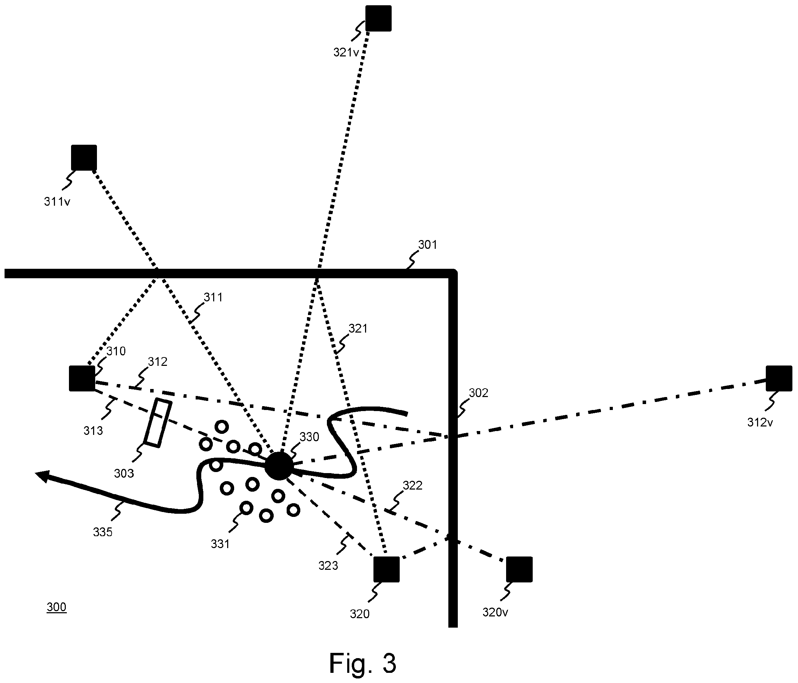

The present disclosure relates to the tracking of a communication device that moves through an indoor environment. An example of this is shown in Fig. 3 and will be used throughout this description to illustrate various example embodiments. Fig. 3 shows an example indoor environment 300 of which two walls 301 and 302 are shown. A mobile communication device 330 moves within this environment 300 along a trajectory 335. The term mobile refers to the ability of device 330 to move within environment 300. The term communication refers to the ability of the device 330 to communicate with a plurality of anchor devices 310, 320. To perform communication, both mobile device 330 and anchor devices 310, 320 are equipped with a transceiver circuitry allowing transmission and reception of communication signals. The purpose of various example embodiments is the tracking of communication device 330 while it moves along the a priori unknown trajectory 335. The tracking is performed by exchanging communication signals between the device 330 and the various anchor devices. The location of the device 330 is then inferred from the properties and characteristics of the exchanged communication signals.

Exchange of communication signals between device 330 and the anchors may be done according to a certain communication standard that specifies the bandwidth and certain properties of the exchanged signals. Examples of communication standards that may be used for the example embodiments are Ultra-Wide-Band, UWB, according to IEEE 802.15.3, and the IEEE 802.15.4a and the IEEE 802.15.4z standard.

As the environment comprises walls 301, 302 or reflective faces in general, communication signals between an anchor and the mobile device will follow different propagation paths. The received signals will then be a combination of the signals along the different propagation paths. The received signal then contains multiple spectral components, MSCs, respectively resulting from these different propagation paths. One type of signal path is the Line of Sight, LoS, path that results in a LoS spectral component, shortly LoS component, in the received signal. In Fig. 3, paths 313 and 323 show the LoS paths between the mobile device 330 and respective anchors 310, 320. A second type of signal path is the first-order propagation path that contains one reflection against a wall or other obstacle. Such resulting first-order propagation path results in a first-order multipath component, $1^{st}$ order MPC, also referred to as $1^{st}$ order spectral component. Returning to Fig. 3, signals between anchor 310 and device 330 can follow $1^{st}$ order path 311 by reflection against wall 301 and can follow $1^{st}$ order path 312 by reflection against wall 302. Similarly, signals between anchor 320 and device 330 can follow $1^{st}$ order path 321 by reflection against wall 301 and can follow $1^{st}$ order path 322 by reflection against wall 302.

The $1^{st}$ order MPCs may also be visualized and represented by defining virtual anchors 311v, 312v, 321v, and 320v. These virtual anchors 311v, 312v, 321v, and 320v can be determined as mirrored locations of the anchor devices 310, 320 according to the first order reflection in the respective first order propagation paths 311, 312, 321, and 320.

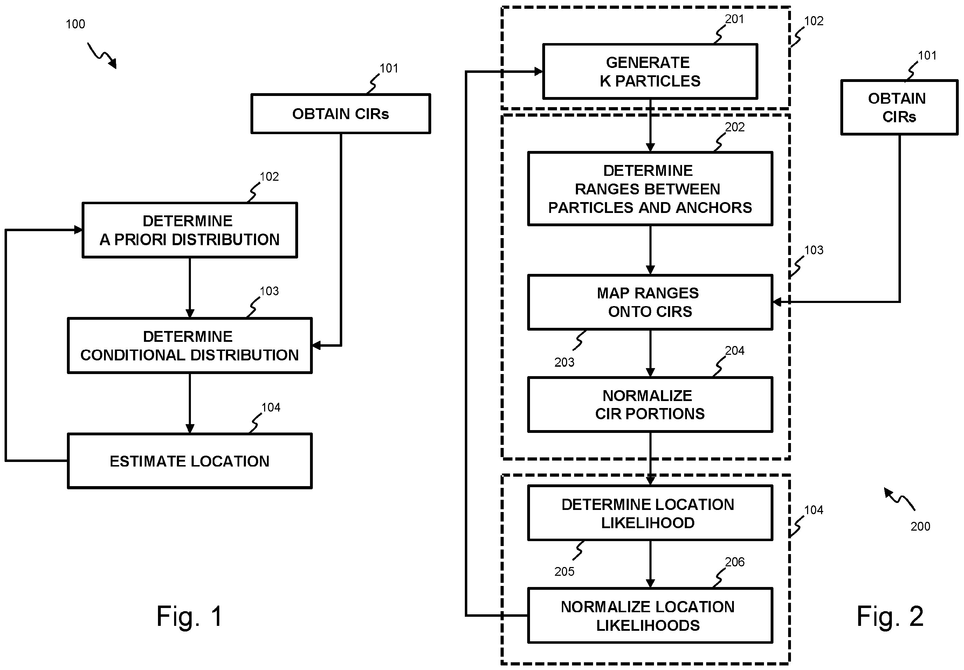

According to example embodiments, the tracking of device 330 is performed by exploiting both the LoS and multi-path components of the received signals in a probabilistic manner according to the steps shown in Fig. 1. More specifically, in a first step 101, the channel impulse responses, CIRs, between the mobile device 330 and respective anchors 310, 320 are determined. A channel impulse response is a characterization of a communication channel and represents the received signal as a function of time or, more general, range, when transmitting a short pulse. A CIR may be obtained in the form of an amplitude-delay profile that specifies the amplitude of the received signal as a function of delay with respect to the transmitted pulse. An amplitude delay profile may be represented mathematically as $h(\tau)$ wherein $\tau$ represents the delay. Different example embodiments use the amplitude delay profile for the defining the CIR, but other forms of channel responses such as an amplitude-angle profile may be used in a similar way. The CIR may be obtained directly as a time-domain measurement of a transmitted impulse. The CIR may also be obtained indirectly from other measured channel characteristics and then be converted to a CIR. For example, starting from a channel frequency response or channel state information in a multiantenna system, a Fourier transfer (FT) may be performed to obtain the amplitude-angle profile.

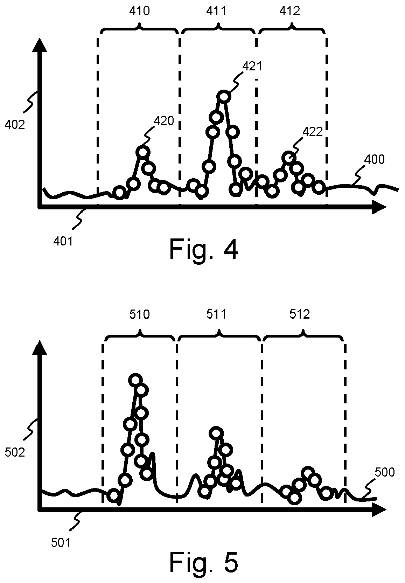

Fig. 4 and 5 illustrate CIRs as amplitude-delay profiles 400, 500 of the communication channels between the mobile device 330 and respective anchors 310 and 320. The Y-axis 402, 502 represents the amplitude of the CIR and the X-axis 401, 501 represents time or delay. The spectral components are reflected in the CIRs by the local maxima. The first local maximum 410, 510 represents the LoS components. LoS component 410 has a smaller magnitude than LoS component 510 because there is an obstacle 303 located between device 330 and anchor 310. This obstacle 303 causes a larger attenuation of the signal. The $1^{st}$ order signal components are visible in the next local maxima 411, 412 for CIR 400 and in local maxima 511, 512 for CIR 500. The location of the MPCs 410-412 and 510-512 are indicative for the distance travelled by the signal, and thus for the length or range of the propagation paths.

More general, considering that there are N anchors at a certain location $\mathbf{p}_A^{(i)}, i = 1, ..., N$ within an environment, and that the unknown position of the mobile communication device is represented by $\mathbf{p}_T$, then the CIR $h^{(i)}(\tau)$ between the device and an anchor $i$ may be represented as:

$$h^{(i)}(\tau) = \alpha_0^{(i)}\delta\left(\tau - \tau_0^{(i)}\right) + \sum_{l=1}^{L_i} \alpha_l^{(i)} \delta\left(\tau - \tau_l^{(i)}\right) + v^{(i)}(\tau) \qquad \text{(Eq. 1)}$$

The first term characterizes the LoS component wherein $\alpha_0^{(i)}$ is indicative for the complex amplitude, $\tau_0^{(i)}$ is the signal delay along the LoS propagation path. The second term characterizes the specular multipath components wherein $L_i$ is the number of specular reflections between the anchor $i$ and the device. The third term $v^{(i)}(\tau)$ is a stochastic component that represents measurement noise and scattered MPCs, i.e. multi-path components that are reflected in multiple directions.

The obtained CIRs according to step 101 that may be characterized by Eq. 1 are then used as input for next steps 103, 104 together with a determined a priori distribution resulting from step 102. Steps 102, 103, 104 form a probabilistic method for estimating the location $\mathbf{p}_T$ of the mobile device as will now be described.

The probabilistic method may be understood by considering another estimation method that is disclosed in S. Mazuelas, A. Conti, J. C. Allen, and M. Z. Win, "Soft Range Information for Network Localization," IEEE Transactions on Signal Processing, vol. 66, no. 12, pp. 3155-3168, 2018. This first estimation method is based on a Bayesian estimator wherein the device's location can be inferred by maximizing the posterior distribution of the position $\mathbf{p}_T$ given a set of range related measurements $y_1, y_2, ..., y_N$, for example time of flight measurements between the device and the N different anchors. When representing the posterior distribution as $f(\mathbf{p}_T|y_1,y_2, ...,y_N)$, then the estimation $\hat{\mathbf{p}}_T$ can be written as:

$$\hat{\mathbf{p}}_T = \underset{\mathbf{p}_T}{argmax}\, f(\mathbf{p}_T|y_1, y_2, ..., y_N). \qquad \text{(Eq. 2)}$$

Eq. 2 may then be rewritten as:

$$\hat{\mathbf{p}}_T = \underset{\mathbf{p}_T}{argmax}\, f(y_N|\left\|\mathbf{p}_T - \mathbf{p}_A^{(N)}\right\|)f(\mathbf{p}_T|y_1, y_2, ..., y_{N-1}), \qquad \text{(Eq. 3)}$$

and therefrom:

$$\hat{\mathbf{p}}_T = \underset{\mathbf{p}_T}{argmax}\, f(\mathbf{p}_T) \prod_{i=1}^{N} f\left(y_i|\left\|\mathbf{p}_T - \mathbf{p}_A^{(i)}\right\|\right); \qquad \text{(Eq. 4)}$$

and wherein $f(\mathbf{p}_T)$ is the prior distribution of the device's position $\mathbf{p}_T$; and wherein $f\left(y_i|\left\|\mathbf{p}_T - \mathbf{p}_A^{(i)}\right\|\right)$ is the distribution of the range-related measurement $y_i$ conditioned on the distance $\left\|\mathbf{p}_T - \mathbf{p}_A^{(i)}\right\|$, i.e. the distance between the device and an anchor $i$ and, thus, the geometric difference between the position of the device $\mathbf{p}_T$ and the position of the $i^{th}$ anchor $\mathbf{p}_A^{(i)}$. In such case, the ranging likelihood, represented as $\mathcal{L}_{y_i}\left(\mathbf{p}_T - \mathbf{p}_A^{(i)}\right)$, will be proportional to $f\left(y_i|\left\|\mathbf{p}_T - \mathbf{p}_A^{(i)}\right\|\right)$.

The above-described estimation method only considers the LoS distances and thus LoS measurements. As described with reference to Fig. 3 to 5, the CIRs 400, 500 include information on the LoS component as seen from portions 410, 510. The CIRs however also include the 1st order multi-path components as shown in portions 411, 412, 511, 512. As described with reference to Fig. 3, the signals along these 1st order propagations paths may also by regarded as signals that are exchanged with the defined virtual anchors 311v, 312v, 320v, 321v. Taking this into account, Eq. 4 can be rewritten as,

$$\hat{\boldsymbol{p}}_T = \underset{\boldsymbol{p}_T}{argmax}\, f(\boldsymbol{p}_T) \prod_{i=1}^{N} f\left(y_i \,\Big|\, \left\| \boldsymbol{p}_T - \boldsymbol{p}_A^{(i)} \right\| \right) \times \prod_{i=1}^{N} \prod_{l=1}^{L_i} f\left(y_{i,l}^{VA} \,\Big|\, \left\| \boldsymbol{p}_T - \boldsymbol{p}_{VA}^{(i,l)} \right\| \right) \qquad \text{(Eq.5)}$$

wherein $y_{i,l}^{VA}$ represents the range-related measurement characterizing the distance between the $l$-th virtual anchor of the $i$-th physical anchor. Similarly, $\boldsymbol{p}_{VA}^{(i,l)}$ is the position of this $l$-th virtual anchor of the $i$-th physical anchor.

Returning to Fig. 1, steps 102-104 apply Eq. 5 to arrive at the estimation of the location $\hat{\boldsymbol{p}}_T$. Under step 102 the a priori distribution $f(\boldsymbol{p}_T)$ may be determined based on a previous estimation of the location. To initialize the step 102, a rough estimate of the location may be used. Such rough estimate may for example be obtained by a triangulation of LoS measurements as known in the art.

Step 103 determines the conditional distributions from Eq. 5. The first determined conditional distribution is $f\left(y_i \,\Big|\, \left\| \boldsymbol{p}_T - \boldsymbol{p}_A^{(i)} \right\| \right)$ i.e. the conditional distribution $f$ of the range-related measurements $y_i$ that are conditioned on a range $\left\| \boldsymbol{p}_T - \boldsymbol{p}_A^{(i)} \right\|$ between a potential location $\boldsymbol{p}_T$ of the communication device within the a priori distribution and the respective anchor devices $\boldsymbol{p}_A^{(i)}$ along the respective line of sight, LoS. The second determined conditional distribution is $f\left(y_{i,l}^{VA} \,\Big|\, \left\| \boldsymbol{p}_T - \boldsymbol{p}_{VA}^{(i,l)} \right\| \right)$, i.e. the conditional distribution $f$ of the range-related measurements $y_{i,l}^{VA}$ that are conditioned on a range $\left\| \boldsymbol{p}_T - \boldsymbol{p}_{VA}^{(i,l)} \right\|$ between a potential location $\boldsymbol{p}_T$ of the communication device within the a priori distribution and the virtual anchor $\boldsymbol{p}_{VA}^{(i,l)}$, thus the range along the first order propagation paths. These conditional distributions are determined from the CIRs as obtained under step 101. This may be done by regarding each region 410-412, 510-412 around a peak in the CIRs 400, 500 that relates to a certain anchor or virtual anchor as a ranging likelihood allowing to derive therefrom the conditional distributions.

Returning to the example of Fig. 3-5, region 410 of CIR 400 characterizes the ranging likelihood for the LoS propagation path 313 whereas regions 411, 412 or CIR 400 characterize the ranging likelihoods for the respective 1st order propagation paths 311, 312. Similarly, region 510 of CIR 500 characterizes the ranging likelihood for the LoS propagation path 323 whereas regions 511, 512 of CIR 500 characterize the ranging likelihoods for the respective 1st order propagation paths 322, 321.

When the conditional distributions are determined, the location of the device 330 can be estimated under step 104 according to Eq. 5, i.e. by determining the potential location for which a combination of the priori distribution $f(\boldsymbol{p}_T)$ and the conditional distributions $f\left(y_i \,\Big|\, \left\| \boldsymbol{p}_T - \boldsymbol{p}_A^{(i)} \right\| \right)$ and $f\left(y_{i,l}^{VA} \,\Big|\, \left\| \boldsymbol{p}_T - \boldsymbol{p}_{VA}^{(i,l)} \right\| \right)$ is maximized. The estimated location may then serve as input for determining the a priori distribution under step 102 based on newly obtained CIRs. By iteratively performing the steps 101-104 of the method 100 different locations of the device 330 can be obtained as a function of times resulting in a trajectory 335 of the device 330.

As described above, the conditional distributions are derivable from the CIRs by truncating the CIRs around the vicinity of the local peaks in the CIRs. The so-obtained truncated profiles at the vicinity of the peaks, e.g. 410-412, 510-512, are then regarded as the corresponding ranging likelihood. This may be done by normalizing the amplitude-delay profile, i.e., by dividing it by its corresponding integral in the delay domain. This way, the probability density function (PDF) of the spectral component at i-th anchor may be approximated as:

$$\mathcal{L}_i\left(\tau_l^{(i)}\right) \propto \frac{h^{(i)}\left(\left|\tau - \tau_l^{(i)}\right| < \epsilon\right)}{\int_{\tau_l^{(i)}+\epsilon}^{\tau_l^{(i)}+\epsilon} h^{(i)}\left(\left|\tau - \tau_l^{(i)}\right| < \epsilon\right) d\tau} ; \qquad \text{(Eq. 6)}$$

and wherein $h^{(i)}(|\tau|)$ is the amplitude-delay profile for an i-th anchor; $\tau_l^{(i)}$ is the delay attributed to the *l*-th spectral component, i.e., LoS or first order, of the amplitude-delay profile for an i-th anchor; and wherein $\varepsilon$ defines the radius of the neighbourhood around this delay $\tau_l^{(i)}$. To obtain the ranging likelihood for each spectral component, a spatial-temporal-spatial likelihood mapping method may be used as will now be described.

The spatial-temporal-spatial likelihood mapping method is based on sequential importance sampling in a particle filter. In importance sampling the posterior probability density function, PDF, $p(\mathbf{x}|\mathbf{z})$ is approximated by a set of samples $\mathbf{x}_k$, ($k = 1, ..., K$), and associated weights $\mathbf{w}_k$, ($k = 1, ..., K$), that are generated from a proposed distribution, i.e. importance density. An example of such a proposed distribution is a multivariate Gaussian distribution. In such case, $p(\mathbf{x}|\mathbf{z})$ may be approximated as:

$$p(\mathbf{x}|\mathbf{z}) = \sum_{k=1}^{K} \frac{\mathbf{w}_k}{\sum_k \mathbf{w}_k} \delta(\mathbf{x} - \mathbf{x}_k). \qquad \text{(Eq.7)}$$

The weight $\mathbf{w}_k$ may by then be calculated from the measurement density and proposed density. The equation Eq. 7 shows a similar form as the CIR expression of Eq. 1. As such, a weight $\mathbf{w}_k$ may be regarded as the normalized amplitude of the different spectral components in the CIR. As a result, a discretized version of a CIR may be used to approximate the ranging likelihood of each spectral component when there are sufficient proposed locations of the device.

Fig. 2 illustrates steps of a method 200 according to an example embodiment that performs the method 100 further applying the above-described spatial-temporal-spatial likelihood mapping.

According to a first step 201 which may be regarded as a specific embodiment of step 101, *K* particles are generated. These particles are indicative for potential locations according to the a priori distribution. The K particles may be generated according to a state transition model taking as input a previous estimated location of the communication device, a previous estimated velocity of the communication device, and an error distribution. The previous estimated location and velocity may be derived from the previous location estimates as determined under step 104 and provided as input to step 102. The error distribution may be a zero-mean Gaussian velocity error on the previous estimated velocity. In matrix notation, the *K* particles at timestamp $t + 1$ may be represented as $\mathbf{x}^{t+1}$ and determined as:

$$\mathbf{x}^{t+1} = \mathbf{F}\mathbf{x}^t + \mathbf{G}n_v; \qquad \text{(Eq. 8)}$$

and wherein

$$\mathbf{x} = \begin{bmatrix} \mathbf{P}^T \\ \mathbf{v}^T \end{bmatrix}, \mathbf{F} = \begin{bmatrix} \mathbf{I}_2 & \Delta t. \mathbf{I}_2 \\ \mathbf{0} & \mathbf{I}_2 \end{bmatrix}, \mathbf{G} = \begin{bmatrix} \Delta t. \mathbf{1}_{2\times 1} \\ \mathbf{1}_{2\times 1} \end{bmatrix}; \qquad \text{(Eq.9)}$$

and wherein P and v are the respective coordinates and velocity of the tracked device; and wherein $\Delta t$ is the elapsed time between two consecutive timestamps $t + 1$ and $t$; and wherein $n_v$ is the zero-mean Gaussian velocity error. Referring back to Fig. 3, the dots 331 illustrate particles generated by the above Eq. 8 based on a previous location 330 of the moving device.

Then the method proceeds to a next step 202 which may be regarded as a first sub step of a more specific embodiment of step 103. According to step 202, ranges between the K particles as obtained from Eq. 8 and the different anchor devices and virtual anchor devices are determined. In other words, the ranges between the K particles (331) and the respective anchor devices are determined along both the LoS propagation path and the first order propagation paths. To determine the ranges, an a priori knowledge of the environment is assumed, i.e. it is known where the different anchor devices are located in the tracked environment and where there are reflective objects within the environment. This way, for a certain particle, the propagation paths can be determined.

Then the method proceeds to a next step 203 which may be regarded as a second sub step of a more specific embodiment of step 103. According to step 203, the calculated ranges obtained from step 202 are mapped onto the respective CIRs as obtained from step 101. From step 202, each particle will define a set of calculated ranges each associated with an anchor or virtual anchor. As each anchor or virtual anchor defines a portion of one of the obtained CIRs, each calculated range can be mapped onto one of the CIRs. This is further illustrated for CIRs 400 and 500 in respectively Fig. 4 and Fig. 5. For example, for CIR 400, each range can be mapped onto the x-axis 401 thereby defining a discrete value on the CIR 400 as visualized by the empty black circles drawn on the CIR 400. By this mapping operation, the different CIR portions 410-412, and 510-512 are directly obtained without requiring to search for local maxima and defining a certain neighbourhood around these maxima.

Then the method proceeds to a next step 204 which may be regarded as a third sub step of a more specific embodiment of step 103. According to step 204 the different resampled CIR portions as obtained from step 203 are normalized Thereby, the probability density function, PDF, of each spectral component is obtained. This normalization may be performed by applying the formula as shown in above equation Eq. 6.

Then the method proceeds to a next step 205 which may be regarded as a first sub step of a more specific embodiment of step 104. According to step 205, the location likelihood for each particle is determined from the so-obtained PDFs. This may be done by assigning to each particle the delay likelihood and then combining the corresponding likelihoods from the different anchors for that particle. The location likelihood may be represented as $\mathcal{L}(\mathbf{P}_k)$, $k = 1, ..., K$.

Then the method proceeds to a next step 206 which may be regarded as a second sub step of a more specific embodiment of step 104. According to step 206, the location likelihood for the K particles is normalized to a value between zero and one, i.e. in the interval (0, 1]. The $k$-th particle is weighted via the weight $\widehat{\omega_k}$ which is defined as:

$$\ln \widehat{\omega_k} = \frac{1}{2\sigma_c^2} \left( \min_{1 \leq k \leq K} \{\omega_k\} - \omega_k \right), \qquad (\text{Eq.}10)$$

and wherein $\omega_k = \left( 1 - \mathcal{L}(\mathbf{P}_k) \right)^2$; and wherein $\sigma_c$ is the standard deviation of $\mathcal{L}(\mathbf{P})$. By the systematic resampling, particles with small weights are eliminated, thereby avoiding the degeneracy phenomenon in the particle filter. The new location value may then be determined as the weighted centre of the K particles using the weights obtained according to Eq. 10.

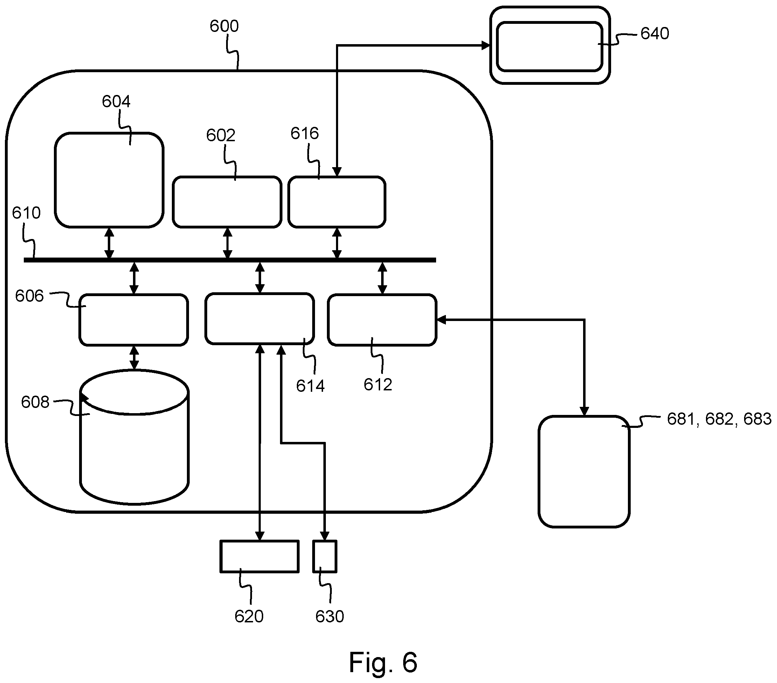

Fig. 6 shows a suitable computing system 600 enabling to implement embodiments of the steps according to the methods 100 and 200. Computing system 600 is also suitable for performing various functions of an anchor device and mobile communication device according to the described embodiments. Computing system 600 may in general be formed as a suitable general-purpose computer and comprise a bus 610, a processor 602, a local memory 604, one or more optional input interfaces 614, one or more optional output interfaces 616, a communication interface 612, a storage element interface 606, and one or more storage elements 608. Bus 610 may comprise one or more conductors that permit communication among the components of the computing system 600. Processor 602 may include any type of conventional processor or microprocessor that interprets and executes programming instructions. Local memory 604 may include a random-access memory (RAM) or another type of dynamic storage device that stores information and instructions for execution by processor 602 and/or a read only memory (ROM) or another type of static storage device that stores static information and instructions for use by processor 602. Input interface 614 may comprise one or more conventional mechanisms that permit an operator or user to input information to the computing device 600, such as a keyboard 620, a mouse 630, a pen, voice recognition and/or biometric mechanisms, a camera, etc. Output interface 616 may comprise one or more conventional mechanisms that output information to the operator or user, such as a display 640, etc. Communication interface 612 may comprise any transceiver-like mechanism such as for example one or more Ethernet interfaces that enables computing system 600 to communicate with other devices and/or systems, for example with other computing devices 681, 682, 683. The communication interface 612 of computing system 600 may be connected to such another computing system by means of a local area network (LAN) or a wide area network (WAN) such as for example the internet. Storage element interface 606 may comprise a storage interface such as for example a Serial Advanced Technology Attachment (SATA) interface or a Small Computer System Interface (SCSI) for connecting bus 610 to one or more storage elements 608, such as one or more local disks, for example SATA disk drives, and control the reading and writing of data to and/or from these storage elements 608. Although the storage element(s) 608 above is/are described as a local disk, in general any other suitable computer-readable media such as a removable magnetic disk, optical storage media such as a CD or DVD, -ROM disk, solid state drives, flash memory cards, ... could be used.

As used in this application, the term "circuitry" may refer to one or more or all of the following:

(a) hardware-only circuit implementations such as implementations in only analog and/or digital circuitry and
(b) combinations of hardware circuits and software, such as (as applicable):

(i) a combination of analog and/or digital hardware circuit(s) with software/firmware and
(ii) any portions of hardware processor(s) with software (including digital signal processor(s)), software, and memory(ies) that work together to cause an apparatus, such as a mobile phone or server, to perform various functions) and

(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. Computer-implemented method (100, 200) for tracking a communication device (330) moving through an indoor environment (300); the method comprising:

- obtaining (101) channel impulse responses, CIRs (400, 500), between the communication device and anchor devices (310, 320) along multiple propagation paths (311-313, 321-323);
- determining (102) an a priori distribution (331) of the location of the communication device within the environment;
- determining (103) from the channel impulse responses conditional distributions of the range-related measurements conditioned on a range between a potential location of the communication device within the a priori distribution and the respective anchor devices along respective line of sight, LoS, and first order propagation paths; and
- estimating (104) the location of the communication device as the potential location for which a combination of the a priori distribution and the conditional distributions is maximized.

2. The method according to claim 1 wherein the determining the a priori distribution is based on a previous estimated location of the communication device, a previous estimated velocity of the communication device, and an error distribution.

3. The method according to claim 2 wherein the error distribution is a zero-mean Gaussian velocity error of the previous estimated velocity.

4. The method according to any one of the claims 1 to 3 wherein the determining an a priori distribution further comprises generating (201) K particles as potential locations according to the a priori distribution.

5. The method according to claim 4 wherein the determining the conditional distributions further comprises calculating (202) ranges between the K particles (331) and the respective anchor devices along the respective LoS and first order propagation paths.

6. The method according to claim 5 wherein the determining the conditional distributions further comprises, mapping (203), for the respective anchor devices and respective propagation paths, the calculated ranges onto the respective CIRs, and normalizing (204) the so-obtained CIR portions thereby obtaining the conditional distributions.

7. The method according to claim 6 wherein the estimating further comprises, for the respective K particles, determining (205) the location likelihood.

8. The method according to claim 5 to 6 wherein the calculating (202) ranges further comprises determining virtual anchors as mirrored locations of the anchor devices according to first order reflected propagation paths, and calculating the ranges between the K particles and both the anchor devices and virtual anchor devices; and wherein the mapping further comprises mapping the calculated ranges for both the anchor devices and virtual anchor devices onto the respective CIRs; and wherein the estimating further comprises, for the respective K particles, determining (205) the location likelihood.

9. The method according to claim 7 or 8 wherein the estimating further comprises normalizing the location likelihood for the K particles.

10. A data processing apparatus comprising means for carrying out the method according to any one of claims 1 to 9.

11. A computer program product comprising instructions which, when the program is executed by a computer, cause the computer to carry out the method according to any one of claims 1 to 9.

12. A computer-readable storage medium comprising instructions which, when executed by a computer, cause the computer to carry out the method according to any one of claims 1 to 9.

Fig. 2

200

101 OBTAIN CIRs

102
201 GENERATE K PARTICLES

103
202 DETERMINE RANGES BETWEEN PARTICLES AND ANCHORS
MAP RANGES ONTO CIRs
204 NORMALIZE CIR PORTIONS
203

104
DETERMINE LOCATION LIKELIHOOD
206 NORMALIZE LOCATION LIKELIHOODS
205

Fig. 1

100

101 OBTAIN CIRs

102 DETERMINE A PRIORI DISTRIBUTION

103 DETERMINE CONDITIONAL DISTRIBUTION

104 ESTIMATE LOCATION

Fig. 3

EP 4 455 711 A1

Fig. 4

Fig. 5

Fig. 6

Europäisches
Patentamt

European
Patent Office

Office européen
des brevets

# EUROPEAN SEARCH REPORT

**Application Number**

**EP 23 17 0698**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/051434 A1 (DRAGANOV ALEXANDR [US] ET AL) 28 February 2013 (2013-02-28) * paragraphs [0009], [0105] – [0113]; figures 1,4 * | 1-12 | INV. G01S5/02 H04W4/029 |
| A | US 2016/223637 A1 (GENTNER CHRISTIAN [DE] ET AL) 4 August 2016 (2016-08-04) * abstract * | 1-12 | |
| A | WO 2018/051274 A1 (UBER TECHNOLOGIES INC [US]) 22 March 2018 (2018-03-22) * abstract * | 1-12 | |

TECHNICAL FIELDS
SEARCHED      (IPC)

G01S
H04W

The present search report has been drawn up for all claims

| Place of search | Date of completion of the search | Examiner |
|---|---|---|
| Munich | 27 September 2023 | Chindamo, Gregorio |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 17 0698

This annex lists the patent family members relating to the patent documents cited in the above-mentioned European search report.
The members are as contained in the European Patent Office EDP file on
The European Patent Office is in no way liable for these particulars which are merely given for the purpose of information.

27-09-2023

| Patent document cited in search report | | Publication date | Patent family member(s) | | Publication date |
|---|---|---|---|---|---|
| US 2013051434 | A1 | 28-02-2013 | US 9304184 B1 | | 05-04-2016 |
| | | | US 2013051434 A1 | | 28-02-2013 |
| US 2016223637 | A1 | 04-08-2016 | DE 102013107242 A1 | | 15-01-2015 |
| | | | EP 3019887 A1 | | 18-05-2016 |
| | | | US 2016223637 A1 | | 04-08-2016 |
| | | | WO 2015003684 A1 | | 15-01-2015 |
| WO 2018051274 | A1 | 22-03-2018 | AU 2017200316 B1 | | 22-03-2018 |
| | | | CA 3036928 A1 | | 22-03-2018 |
| | | | EP 3513218 A1 | | 24-07-2019 |
| | | | US 9766349 B1 | | 19-09-2017 |
| | | | US 2018074209 A1 | | 15-03-2018 |
| | | | US 2019107630 A1 | | 11-04-2019 |
| | | | WO 2018051274 A1 | | 22-03-2018 |

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **C. WU ; X. YI ; W. WANG ; L. YOU ; Q. HUANG ; X. GAO ; Q. LIU.** Learning to Localize: A 3D CNN Approach to User Positioning in Massive MIMO-OFDM Systems. *IEEE Transactions on Wireless Communications,* 2021, vol. 20 (7), 4556-4570

- **K. WITRISAL ; P. MEISSNER ; E. LEITINGER ; Y. SHEN ; C. GUSTAFSON ; F. TUFVESSON ; K. HANEDA ; D. DARDARI ; A. F. MOLISCH ; A. CONTI.** High-Accuracy Localization for Assisted Living: 5G systems will turn multipath channels from foe to friend. *IEEE Signal Processing Magazine,* 2016, vol. 33 (2), 59-70
- **S. MAZUELAS ; A. CONTI ; J. C. ALLEN ; M. Z. WIN.** Soft Range Information for Network Localization. *IEEE Transactions on Signal Processing,* 2018, vol. 66 (12), 3155-3168